# EUROPEAN PATENT SPECIFICATION

(11) **EP 3 897 155 B1**
(45) Date of publication and mention of the grant of the patent: **06.05.2026**
(21) Application number: 19839120.3
(22) Date of filing: 20.12.2019
(51) Int. Cl.: A01N 57/20, A01N 25/28, A01N 25/30, A01P 13/00

(54) **ENCAPSULATED PESTICIDE**
VERKAPSELTES PESTIZID
PESTICIDE ENCAPSULÉ

(30) Priority: 21.12.2018 GB 201821031
(43) Date of publication of application: 27.10.2021
(73) Proprietor: Pangaea Biosciences Ltd, Cambridge CB4 0WS (GB)
(72) Inventor: HAIGH, Graham, Huddersfield Yorkshire HD8 9TR (GB)
(74) Representative: Williams Powell
(86) International application number: PCT/GB2019/053659
(87) International publication number: WO 2020/128511

(56) References cited:
- WO-A1-2019/008341
- WO-A1-2019/008341
- US-A1- 2007 141 165
- US-A1- 2007 141 165
- H. MADZIVA ET AL: "Alginate?pectin microcapsules as a potential for folic acid delivery in foods", JOURNAL OF MICROENCAPSULATION., vol. 22, no. 4, 3 June 2005 (2005-06-03), GB, pages 343 - 351, XP055672329, ISSN: 0265-2048, DOI: 10.1080/02652040500100931
- GERSTL Z ET AL: "Controlled release of pesticides into water from clay -polymer formulations", JOURNAL OF AGRICULTURAL AND FOOD CHEMISTRY, AMERICAN CHEMICAL SOCIETY, BOOKS AND JOURNALS DIVISION, US, vol. 46, 1 September 1998 (1998-09-01), pages 3803 - 3809, XP002205376, ISSN: 0021-8561, DOI: 10.1021/JF980184P
- LOCATELLI GABRIEL OLIVO ET AL: "Development ofTrichodermasp. formulations in encapsulated granules (CG) and evaluation of conidia shelf-life", BIOLOGICAL CONTROL, vol. 117, 1 September 2017 (2017-09-01), pages 21 - 29, XP085318454, ISSN: 1049-9644, DOI: 10.1016/J.BIOCONTROL.2017.08.020
- GERM� N A ISLAN ET AL: "Studies of Ciprofloxacin Encapsulation on Alginate/Pectin Matrixes and Its Relationship with Biodisponibility", APPLIED BIOCHEMISTRY AND BIOTECHNOLOGY ; PART A: ENZYME ENGINEERING AND BIOTECHNOLOGY, HUMANA PRESS INC, NEW YORK, vol. 167, no. 5, 28 February 2012 (2012-02-28), pages 1408 - 1420, XP035087998, ISSN: 1559-0291, DOI: 10.1007/S12010-012-9610-2
- RAMIN KHAKSAR ET AL: "Nisin-loaded alginate-high methoxy pectin microparticles: preparation and physicochemical characterisation", INTERNATIONAL JOURNAL OF FOOD SCIENCE AND TECHNOLOGY., vol. 49, no. 9, 17 March 2014 (2014-03-17), GB, pages 2076 - 2082, XP055672450, ISSN: 0950-5423, DOI: 10.1111/ijfs.12516
- MARIANA DOS SANTOS SILVA ET AL: "Paraquat-loaded alginate/chitosan nanoparticles: Preparation, characterization and soil sorption studies", JOURNAL OF HAZARDOUS MATERIALS, vol. 190, no. 1-3, 1 June 2011 (2011-06-01), AMSTERDAM, NL, pages 366 - 374, XP055672453, ISSN: 0304-3894, DOI: 10.1016/j.jhazmat.2011.03.057
- CINTIA RODRIGUES MARUYAMA ET AL: "Nanoparticles Based on Chitosan as Carriers for the Combined Herbicides Imazapic and Imazapyr", SCIENTIFIC REPORTS, vol. 6, no. 1, 27 January 2016 (2016-01-27), XP055672457, DOI: 10.1038/srep19768
- M. D. LOPEZ ET AL: "Development of Formulations to Improve the Controlled-Release of Linalool to Be Applied As an Insecticide", JOURNAL OF AGRICULTURAL AND FOOD CHEMISTRY, vol. 60, no. 5, 27 January 2012 (2012-01-27), US, pages 1187 - 1192, XP055672458, ISSN: 0021-8561, DOI: 10.1021/jf204242x
- GERSTL Z ET AL: "Controlled release of pesticides into water from clay -polymer formulations", JOURNAL OF AGRICULTURAL AND FOOD CHEMISTRY, AMERICAN CHEMICAL SOCIETY, BOOKS AND JOURNALS DIVISION, US, vol. 46, 1 September 1998 (1998-09-01), pages 3803 - 3809, XP002205376, ISSN: 0021-8561, DOI: 10.1021/JF980184P
- LOCATELLI GABRIEL OLIVO ET AL: "Development ofTrichodermasp. formulations in encapsulated granules (CG) and evaluation of conidia shelf-life", BIOLOGICAL CONTROL, vol. 117, 1 September 2017 (2017-09-01), pages 21 - 29, XP085318454, ISSN: 1049-9644, DOI: 10.1016/J.BIOCONTROL.2017.08.020
- GERMÃ N A ISLAN ET AL: "Studies of Ciprofloxacin Encapsulation on Alginate/Pectin Matrixes and Its Relationship with Biodisponibility", APPLIED BIOCHEMISTRY AND BIOTECHNOLOGY ; PART A: ENZYME ENGINEERING AND BIOTECHNOLOGY, HUMANA PRESS INC, NEW YORK, vol. 167, no. 5, 28 February 2012 (2012-02-28), pages 1408 - 1420, XP035087998, ISSN: 1559-0291, DOI: 10.1007/S12010-012-9610-2
- RAMIN KHAKSAR ET AL: "Nisin-loaded alginate-high methoxy pectin microparticles: preparation and physicochemical characterisation", INTERNATIONAL JOURNAL OF FOOD SCIENCE AND TECHNOLOGY., vol. 49, no. 9, 17 March 2014 (2014-03-17), GB, pages 2076 - 2082, XP055672450, ISSN: 0950-5423, DOI: 10.1111/ijfs.12516
- MARIANA DOS SANTOS SILVA ET AL: "Paraquat-loaded alginate/chitosan nanoparticles: Preparation, characterization and soil sorption studies", JOURNAL OF HAZARDOUS MATERIALS, vol. 190, no. 1-3, 1 June 2011 (2011-06-01), AMSTERDAM, NL, pages 366 - 374, XP055672453, ISSN: 0304-3894, DOI: 10.1016/j.jhazmat.2011.03.057
- CINTIA RODRIGUES MARUYAMA ET AL: "Nanoparticles Based on Chitosan as Carriers for the Combined Herbicides Imazapic and Imazapyr", SCIENTIFIC REPORTS, vol. 6, no. 1, 27 January 2016 (2016-01-27), XP055672457, DOI: 10.1038/srep19768
- M. D. LOPEZ ET AL: "Development of Formulations to Improve the Controlled-Release of Linalool to Be Applied As an Insecticide", JOURNAL OF AGRICULTURAL AND FOOD CHEMISTRY, vol. 60, no. 5, 27 January 2012 (2012-01-27), US, pages 1187 - 1192, XP055672458, ISSN: 0021-8561, DOI: 10.1021/jf204242x

## Description

The present invention relates to a method for encapsulating a pesticide, and in particular to a method which avoids the need for forming an emulsion. It also relates to an encapsulated pesticide formed according to the method, and to methods of using the pesticide with or without an adjuvant. More particularly it relates to a pesticide which is a herbicide.

Herbicides are commonly used in agriculture to improve the productivity and quality of the grown product. The global market for herbicides is estimated to reach $31.5 billion by 2020. Asia-Pacific is the dominant market accounting for two fifth of herbicide use, whereas North America region equates to one-third of global revenue generated by the herbicide market.

At present, the most widely used herbicide in the world is glyphosate, which has global sales amounting to more than $10 billion per year due to low cost production and low environmental impact.

As a result of the prolonged use of herbicides, weeds are becoming resistant and this is increasing exponentially with over 217 weed species presently resistant around the world. In most cases, it is estimated that weed resistance will emerge within three years on a piece of land which has been treated with a given herbicide.

Current solutions are either to develop novel herbicides or switch from glyphosate-ready to glufosinate-ready crops. Both alternatives are expensive and there are no guarantees that the weed will not become resistant after 3-5 years. In case of the herbicide glufosinate, weed-resistance has already been reported. The first cases of weed-resistance were reported in 2009 and increasing use of the herbicide is likely to result in widespread resistance.

Other alternatives are to use higher dosages of glyphosate, which could be detrimental to the environment or in extreme circumstances manual removal of the weeds, which is labour intensive. Both alternatives lead to higher costs or danger of ruining the fertile land.

EP 1 499 183 B2 (Rothamsted Research Institute Limited et al.) discloses a method for preventing or reducing resistance to a pesticide of a substrate pest, which method comprises administering to the substrate or the pest a metabolic enzyme inhibitor (such as piperonyl butoxide - PBO) and (substantially simultaneously) a pesticide (such as a pyrethroid insecticide) encapsulated in a degradable capsule. The capsule prevents an effective dose of the pesticide from being absorbed by the pest until the inhibitor has had time to begin its inhibiting effect on the substrate. The formulation used in this case is Karate Zeon^{®} which is a PVA-encapsulated insecticide (lambda-cyhalothrin) produced by Syngenta.

EP 0427991 A1 (Sumitomo Chemical Co.) discloses an insecticidal and/or acaricidal and/or nematicidal composition which is a mixture of an encapsulated part which is formed of water-insoluble microcapsules and a flowable part which is emulsified or suspended in water.

US 2015/320036 A1 discloses a process for obtaining biopolymeric nanoparticles containing Azadirachta indica A. Juss (Neem), which comprises, in Phase I, preparing an aqueous emulsion of Neem oil and extracts, in Phase II, preparing a biopolymer solution in organic solvent, followed by mixture of both Phases I and II, and, in Phase III, preparing an aqueous emulsion of a surfactant and adding it to the Phase I and II mixture, affording a nanoparticle suspension which is stabilized. Biopolymeric nanoparticles and powder microparticles obtained are also described.

US 2016/0330952 A1 discloses methods for the encapsulation of volatile organic compounds by formation of stable emulsions of the volatile organic compounds that are mixed with encapsulating polymer solutions and then formed into ultrafine fibers. The ultrafine fibers containing the encapsulated volatile organic compounds can be formed into a variety of formats for use to preserve perishable products.

The present applicant has filed International Patent Publication No. WO 2019/008341 which seeks to provide an improved encapsulated pesticide. The present application seeks to provide yet a further improvement, and in particular an improved method which is commercially suitable for industrial production of the encapsulated pesticide.

Other prior art documents include:
GERSTL Z ET AL, "Controlled release of pesticides into water from clay -polymer formulations", JOURNAL OF AGRICULTURAL AND FOOD CHEMISTRY, AMERICAN CHEMICAL SOCIETY, BOOKS AND JOURNALS DIVISION, US, (19980901), vol. 46, doi:10.
LOCATELLI GABRIEL OLIVO ET AL, "Development ofTrichodermasp. formulations in encapsulated granules (CG) and evaluation of conidia shelf-life", BIOLOGICAL CONTROL, (20170901), vol. 117, doi:10.1016/J.BIOCONTROL.
GERMÃ N A ISLAN ET AL, "Studies of Ciprofloxacin Encapsulation on Alginate/Pectin Matrixes and Its Relationship with Biodisponibility", APPLIED BIOCHEMISTRY AND BIOTECHNOLOGY; PART A: ENZYME ENGINEERING AND BIOTECHNOLOGY, HUMANA PRESS INC, NEW YORK, (20120228), vol. 167, no. 5.
RAMIN KHAKSAR ET AL, "Nisin-loaded alginate-high methoxy pectin microparticles: preparation and physicochemical characterisation", INTERNATIONAL JOURNAL OF FOOD SCIENCE AND TECHNOLOGY., GB, (20140317), vol. 49, no. 9.
MARIANA DOS SANTOS SILVA ET AL, "Paraquat-loaded alginate/chitosan nanoparticles: Preparation, characterization and soil sorption studies", JOURNAL OF HAZARDOUS MATERIALS, AMSTERDAM, NL, (20110601), vol. 190, no. 1-3.
CINTIA RODRIGUES MARUYAMA ET AL, "Nanoparticles Based on Chitosan as Carriers for the Combined Herbicides Imazapic and Imazapyr", SCIENTIFIC REPORTS, (20160127), vol. 6, no. 1.
M. D. LOPEZ ET AL, "Development of Formulations to Improve the Controlled-Release of Linalool to Be Applied As an Insecticide", JOURNAL OF AGRICULTURAL AND FOOD CHEMISTRY, US, (20120127), vol. 60, no. 5.

In accordance with a first aspect of the present invention, there is provided a method for encapsulating a pesticide including the steps of:
(a) mixing, in the solution, a first biopolymer which is an alginate with a viscosity from 4 to 100 centipoise measured for 1% aqueous solution at 20 centigrade (°C) and a second biopolymer which is a pectin,
(b) adding the product of step (a) to a solution of pesticide,
(c) adding calcium ions and adding a surfactant to the product of step (b), wherein the method is carried in an aqueous solution .

In the preferred embodiment the surfactant is a cocoamine surfactant. The amount of the surfactant is from 3 % to 30 % e.g. about 16 %.

It has been discovered that the inventive method is able to produce an encapsulated pesticide without needing to produce an emulsion (either oil-in-water or water-in-oil). This has substantial advantages both environmentally (avoiding the need to use organic solvents) and commercially (because expensive washing steps are not needed). In addition, the process can be performed in a single vessel, avoiding the need for centrifugation or filtering steps. The product also has suitable pesticide release properties.

The first biopolymer is an alginate with a viscosity from 4 to 100 centipoise (measured for 1% aqueous solution at 20 centigrade (°C)).

The use of a low viscosity alginate ensures that the resulting product has suitable rheological properties for application to plants (for example). The pectin is e.g. a citrus pectin. It is preferably in form of an ester more preferably with the degree of esterification up to 30 %.

The encapsulated pesticide can be applied to a plant with or in absence of adjutants.

The addition of calcium ions results in a more stable encapsulated product. The addition of hard water is believed to provide a sufficient level of calcium ions.
Figure 1 is a schematic diagram illustrating the preparation of microcapsules via the comparative Emulsion-gelation method; and

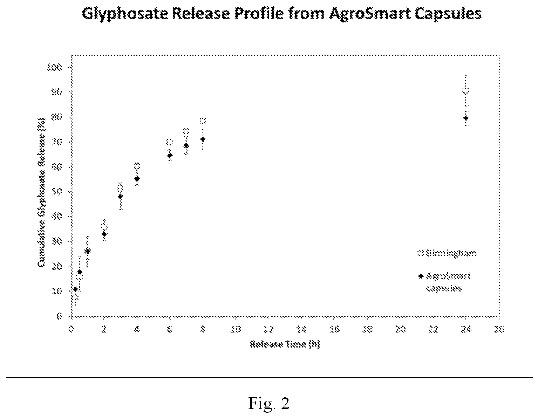

Figure 2 is a graph showing the cumulative glyphosate release over time from capsules encapsulated in accordance with the invention.

### Experimental

### Materials

All the chemicals were purchased from either Aldrich or Fisher Scientific, whereas the solvents were purchased from Fisher Scientific.
- Alginic acid sodium salt from brown algae (Aldrich; product number A0682).
- Pectin from citrius peel with galactaronic acid ≥ 74 % (Aldrich; product number P9135).
- Chitosan from crab shell, with at least 85% deacylated (Aldrich; product number 48165).
- Gelatine from bovine skin with around 75 bloom (Aldrich).
- Calcium chloride anhydrous powder (Fisher Scientific; product number 1.02378.2500).
- Glacial acetic acid (Fisher Scientific; A/0360/PB17).
- Phosphoric acid (Aldrich; product number 79617).
- Glyphosate (99 %, Aldrich: product number 455251).
- The 67 % glyphosate isopropylammonium solution was supplied by Pangea Chemicals.
- Isopropylamine (Aldrich: product number 471291).
- Sunflower oil (supermarket brand; ASDA).

### COMPARATIVE EXAMPLE A

### Emulsion-gelation method

- Aqueous solutions of 4 % (w/w) of coating materials were prepared in distilled water. The only exception being chitosan where 1 % solution was prepared in 1 % (v/v) acetic acid, which was also prepared in distilled water.
- For the formulations containing the mixed coatings; the mixed coating solutions were prepared by stirring the required w/w ratios of the individual coating solutions for 5 min prior to the addition of glyphosate salt to ensure homogeneous mixture.
- An aqueous solution of coating material (25 g) was mixed with aqueous solution of 67 % (w/w) glyphosate isopropylammonium solution (5 g) using a magnetic stirrer at 200 rpm for 2 min.
- The resultant solution was added dropwise to a stirred 250 ml breaker containing sunflower oil (100 ml) to form an emulsion using a homogeniser (IKA) at 1000 rpm with blade diameter 27 mm.
- After 30 min, calcium chloride (1 g) powder was added slowly over 10 min. Small portions of powder (0.1 g) was sprinkled using a stainless steel spatula to ensure the powder was evenly distributed over the reaction vessel. The calcium chloride reacts instantaneously when it comes in contact with the coating material.
- The resultant reaction mixture was further stirred for 30 min at 1000 rpm using a homogenizer. Observe formation of white capsules settling to the bottom of the breaker.
- The resultant reaction mixture was separated in two centrifuge tubes (50 ml) and centrifuged for 10 min at 3300 rpm.
- The supernatant was discarded.
- Hexane (50 ml) was added to each centrifuge tube (50 ml volume) and the suspension centrifuged for 10 min at 3300 rpm.
- The supernatant was decanted and the process was repeated once again.
- The microcapsules were placed under high vacuum overnight to remove remaining solvent residue.

### REFERENCE EXAMPLE B

Experimental preparation of Glyphosate 120 g/l CS - 1000Lts

### Step one: Premix A

In a stainless-steel ribbon blender, mix the following components:
30 Kilograms low viscosity sodium alginate (1% solution with a viscosity of less than 20 cps)
10 Kilograms pectin, specification of greater 74% Galacturonic acid which suggests the esterification is less than 26%
Mix the above for 30 minutes at a rate between 5 and 10 RPM

### Step two: Premix B

In a clean stainless-steel mixing vessel with suitable extraction, mixing and temperature, add 267 Kilograms Glyphosate-Isopropylammonium salt 620 g/kg (to give 122 g/l approx.)
Warm and maintain the above 45 to 55°C
Start the propeller mixer at a speed to produce a vortex in the liquid.
Slowly add Premix A (40 Kilograms) into the vortex at a speed so no obvious lumps form.

Once added, slow the mixer to a speed such that no additional air is added into the solution, remove the heat source and allow the product to stir whilst the temperature returns to ambient.

**** Sample liquid, all Premix A must have dissolved into the Glyphosate IPA Salt, this can take between 2 and 24 hours subject to Alginate / Pectin source.

### Step three: final product

Take 307 Kilograms of the product of Step 2
Maintain slow agitation, do not incorporate any air bubbles.
Slowly add at a rate of 100 Kilograms / Hour 622.5 Kilograms WHO standard hard water (The calcium required comes from the water hardness)
Then add
160.0 Kilograms Surfactant LKD 1559
2.5 Kilograms Acid Blue 9 concentrate
0.1 Kilograms Citrus Burst WS
Total = 1092.1 Kilograms / 1000 Litres

### RESULTS

### Capsule Characterisation

### Encapsulation Efficiency (ee)

- The ee for the capsules were determined via thoroughly grinding the capsules (100 mg) periodically for 1 min after intervals of 15 min over 1 h using a mortar and pestle in an aqueous solution of potassium dihydrogen phosphite buffer (5ml).
- After 1 h, the ground mixtures were filtered (0.45 µm) and samples were run by HPLC to determine the glyphosate concentration. Each experiment was repeated three times for each capsule.

The results for the capsules of Comparative Example A and Example B are shown in Table 1 below:

| **Capsules produced by:** | **EE (%)** | **Active load (%)** |
|---|---|---|
| **Example A** | 83 ± 6 | 13 ± 1 |
| **Example B** | 74 ± 4 | 10 ± 1 |

### Glyphosate Release Studies

These were carried out using HPLC. Capsules to be tested were placed in a dialysis tube (1g in 50ml water) and mixed at 150rpm at 25°C and 35% humidity.

Capsules were then sampled at different times to analyse glyphosate release using HPLC.

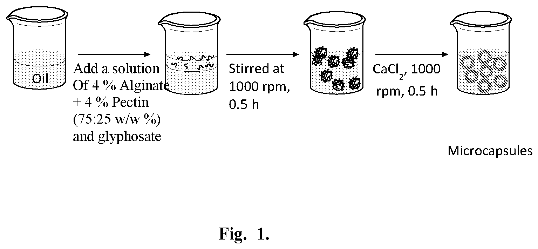

The release profile for the capsules of Comparative Example A (labelled "Birmingham") and Example B (labelled "AgroSmart capsules") are shown in Figure 1 below. It can be seen that comparable release profiles are obtained despite the difference in encapsulation methods.

## Claims

1. A method for encapsulating a pesticide, including the steps of
(a) mixing, in solution, a first biopolymer which is an alginate with a viscosity from 4 to 100 centipoise measured for 1% aqueous solution at 20 centigrade (°C) and a second biopolymer which is a pectin,
(b) adding the product of step (a) to a solution of pesticide,
(c) adding calcium ions and adding a surfactant to the product of step (b), wherein the method is carried out in an aqueous solution.

2. A method as claimed in claim 1, wherein the pectin is in the form of an ester.

3. A method as claimed in claim 1 or 2, wherein the ratio of the first to the second biopolymer is from 9:1 to 1:9.

4. A method as claimed in claim 3, wherein the ratio of the first to the second biopolymer is about 3:1.

5. A method as claimed in any preceding claim, wherein in step (b) the product is stirred at a rate of stirring from 500 to 3000 RPM.

6. A method as claimed in claim 5, wherein the product is continuously stirred from 30 minutes to 24 hours.

7. A method as claimed in any preceding claim, wherein the pesticide is glyphosate, glufosinate, or any water-soluble pesticide.

8. A method as claimed in claim 7, wherein the pesticide is glyphosate in the form of a salt of ammonium, diammonium, dimethylammonium, isopropylammonium, potassium or sesquisodium.

9. A method as claimed in any preceding claim, wherein step (b) is carried out at a temperature from 40°C to 60°C.

10. A method as claimed in any preceding claim, wherein the pesticide is provided in the form of a 62% solution in water.

11. A method as claimed in any preceding claim which is carried out as a continuous process or as a batch process.

12. A method as claimed in any preceding claim in which the amount of pesticide in the final product is from 0.2 w/v % to 40 w/v %.

13. A method of applying an encapsulated pesticide comprising: i) obtaining the encapsulated pesticide by the method as claimed in any preceding claim and ii) applying the product together with an adjuvant to a plant.

14. A method as claimed in claim 13, wherein the adjuvant is PBO.

15. A method of applying an encapsulated pesticide comprising: i) obtaining the encapsulated pesticide by the method as claimed in any of claims 1 to 12 and ii) applying the product in the absence of an adjuvant to a plant.

## Patentansprüche

1. Verfahren zum Verkapseln eines Pestizids, umfassend die Schritte
(a) Mischen, in Lösung, eines ersten Biopolymers, das ein Alginat mit einer Viskosität von 4 bis 100 Centipoise, gemessen für 1 %ige wässrige Lösung bei 20°C, ist, und eines zweiten Biopolymers, das ein Pektin ist,
(b) Zugeben des Produkts von Schritt (a) zu einer Lösung eines Pestizids,
(c) Zugeben von Calciumionen und Zugabe eines Surfactants zu dem Produkt von Schritt (b), wobei das Verfahren in einer wässrigen Lösung durchgeführt wird.

2. Verfahren nach Anspruch 1, wobei das Pektin in Form eines Esters ist.

3. Verfahren nach Anspruch 1 oder 2, wobei das Verhältnis zwischen dem ersten und dem zweiten Biopolymer 9:1 bis 1:9 beträgt.

4. Verfahren nach Anspruch 3, wobei das Verhältnis zwischen dem ersten und dem zweiten Biopolymer etwa 3:1 beträgt.

5. Verfahren nach einem der vorhergehenden Ansprüche, wobei in Schritt (b) das Produkt mit einer Rührgeschwindigkeit von 500 bis 3000 U/min gerührt wird.

6. Verfahren nach Anspruch 5, wobei das Produkt von 30 Minuten bis 24 Stunden kontinuierlich gerührt wird.

7. Verfahren nach einem der vorhergehenden Ansprüche, wobei das Pestizid Glyphosat, Glufosinat oder irgendein wasserlösliches Pestizid ist.

8. Verfahren nach Anspruch 7, wobei das Pestizid Glyphosat in Form eines Ammonium-, Diammonium-, Dimethylammonium-, Isopropylammonium-, Kalium- oder Sesquisodiumsalzes ist.

9. Verfahren nach einem der vorhergehenden Ansprüche, wobei Schritt (b) bei einer Temperatur von 40°C bis 60°C durchgeführt wird.

10. Verfahren nach einem der vorangehenden Ansprüche, wobei das Pestizid in der Form einer 62%igen Lösung in Wasser bereitgestellt wird.

11. Verfahren nach einem der vorangehenden Ansprüche, das als kontinuierliches Verfahren oder als Chargenverfahren durchgeführt wird.

12. Verfahren nach einem der vorhergehenden Ansprüche, bei dem die Menge des Pestizids im Endprodukt zwischen 0,2 Gew./Vol.-% und 40 Gew./Vol.-% liegt.

13. Verfahren zum Anwenden eines eingekapselten Pestizids, umfassend: i) Erhalten des eingekapselten Pestizids durch das Verfahren nach einem der vorhergehenden Ansprüche und ii) Anwenden des Produkts zusammen mit einem Adjuvans auf eine Pflanze.

14. Verfahren nach Anspruch 13, wobei das Adjuvans PBO ist.

15. Verfahren zum Anwenden eines eingekapselten Pestizids, umfassend: i) Erhalten des eingekapselten Pestizids durch das Verfahren nach einem der Ansprüche 1 bis 12 und ii) Anwenden des Produkts in Abwesenheit eines Adjuvans auf eine Pflanze.

## Revendications

1. Procédé d'encapsulation d'un pesticide, comprenant les étapes suivantes :
(a) mélanger, en solution, un premier biopolymère qui est un alginate ayant une viscosité de 4 à 100 centipoises mesurée pour une solution aqueuse à 1 % à 20 degrés Celsius (°C) et un second biopolymère qui est une pectine,
(b) ajouter le produit de l'étape (a) à une solution de pesticide,
(c) ajouter des ions calcium et ajouter un tensioactif au produit de l'étape (b), le procédé étant mis en œuvre dans une solution aqueuse.

2. Procédé selon la revendication 1, dans lequel la pectine est sous forme d'ester.

3. Procédé selon la revendication 1 ou 2, dans lequel le rapport du premier au second biopolymère est de 9:1 à 1:9.

4. Procédé selon la revendication 3, dans lequel le rapport du premier au second biopolymère est d'environ 3:1.

5. Procédé selon l'une quelconque des revendications précédentes, dans lequel, à l'étape (b), le produit est agité à une vitesse d'agitation de 500 à 3000 tours par minute (RPM).

6. Procédé selon la revendication 5, dans lequel le produit est agité en continu pendant 30 minutes à 24 heures.

7. Procédé selon l'une quelconque des revendications précédentes, dans lequel le pesticide est le glyphosate, le glufosinate ou tout pesticide hydrosoluble.

8. Procédé selon la revendication 7, dans lequel le pesticide est le glyphosate sous forme d'un sel d'ammonium, de diammonium, de diméthylammonium, d'isopropylammonium, de potassium ou de sesquisodium.

9. Procédé selon l'une quelconque des revendications précédentes, dans lequel l'étape (b) est réalisée à une température de 40 °C à 60 °C.

10. Procédé selon l'une quelconque des revendications précédentes, dans lequel le pesticide est fourni sous forme d'une solution à 62 % dans l'eau.

11. Procédé selon l'une quelconque des revendications précédentes, mis en œuvre sous forme de procédé continu ou de procédé discontinu.

12. Procédé selon l'une quelconque des revendications précédentes, dans lequel la quantité de pesticide dans le produit final est de 0,2 % p/v à 40 % p/v.

13. Procédé d'application d'un pesticide encapsulé comprenant :
i) l'obtention du pesticide encapsulé par le procédé selon l'une quelconque des revendications précédentes, et
ii) l'application du produit conjointement avec un adjuvant sur une plante.

14. Procédé selon la revendication 13, dans lequel l'adjuvant est le PBO.

15. Procédé d'application d'un pesticide encapsulé comprenant :
i) l'obtention du pesticide encapsulé par le procédé selon l'une quelconque des revendications 1 à 12, et
ii) l'application du produit en l'absence d'un adjuvant sur une plante.
